# EUROPEAN PATENT SPECIFICATION

(11) **EP 3 172 980 B1**
(45) Date of publication and mention of the grant of the patent: **15.09.2021**
(21) Application number: 15003401.5
(22) Date of filing: 30.11.2015
(51) Int. Cl.: A43B 7/14, A43B 13/12, A43B 13/18, B29D 35/00, B29D 35/14

(54) **METHOD FOR PRODUCING A SOLE FOR A SHOE**
VERFAHREN ZUR HERSTELLUNG EINER SOHLE FÜR EINEN SCHUH
PROCÉDÉ DE FABRICATION D'UNE SEMELLE POUR UNE CHAUSSURE

(43) Date of publication of application: 31.05.2017
(73) Proprietor: Hartmann, Matthias, 91301 Forchheim (DE)
(72) Inventor: Hartmann, Matthias, 91301 Forchheim (DE)
(74) Representative: Gosdin, Michael

(56) References cited:
- EP-A2- 2 649 896
- WO-A1-01/01806
- US-A1- 2012 329 892
- US-A1- 2014 223 777

## Description

The invention relates to a method for producing a sole for a shoe, especially for a sports shoe, wherein the sole has at least a first section which consists of a first plastic material and has at least a second section which consists of a second plastic material, wherein the second plastic material is Expanded Thermoplastic Polyurethan (E-TPU).

Soles for shoes of the generic kind are well known in the art. In US **2009/0013558 A1** a shoe sole is disclosed which comprises of two different polymer materials, i. e. a first section is made of a first material and a second section is made of a second material. In WO 2007/082838 A1 a shoe sole is disclosed which specifically is made from Expanded Thermoplastic Polyurethan (E-TPU). Here, also detailed information is disclosed with respect to this type of plastic material; concerning the mentioned material E-TPU explicit reference is made to this document.

In DE 10 2012 206 094 A1 a shoe sole is disclosed which also uses the combination of two different materials, wherein one of the materials is Expanded Thermoplastic Polyurethan (E-TPU). The section consisting of E-TPU is quite large here.

With respect to the solution according to DE 10 2012 206 094 A1 it was found that the production costs of a respective sole for a shoe is quite high as the expensive E-TPU material is required in a significant amount.

In EP 2 649 896 A2 a method of the above mentioned kind is disclosed in which a recess in a sole part is filled with an injection moulded insert made from E-TPU. Similar and other solutions are shown in WO 01/01806 A1, in US 2012/329892 A1 and in US 2014/223777 A1**.**

Thus, it is an object of the present invention to propose a method for the production of a shoe sole by which it becomes possible to obtain good wearing properties of the shoe while the required amount of E-TPU is limited as far as possible. Furthermore, a suitable method is aimed for which allows an economical use of the E-TPU material.

The solution of this object according to the invention is characterized in that the method comprises the steps of:
a) Producing the first section of the sole, wherein in the first section at least one recess is created which has an opening at an upper side of the sole and which is at least partially closed by a bottom region at a bottom side of the sole, wherein the recess has a defined shape in a top plan view;
b) Producing of a laminar sheet made of the second plastic material, i. e. made from E-TPU;
c) Cutting-out of an insert of the laminar sheet produced according to step b), wherein the insert is or forms at least a part of the second section of the sole, wherein the shape of the insert corresponds to the shape of the recess, wherein the cutting-out of the insert takes place by punching;
d) Fixing the insert in the recess.

The production of the first section of the sole according to above step a) takes place preferably by injection molding.

So, it becomes possible in a very economical manner to use the laminar sheet of E-TPU and to machine is efficiently. If the shape of the insert is selected accordingly it becomes possible to reduce the scrape to a minimum and thus save money.

The fixation of the insert according to above step d) takes place preferably by glueing.

Preferably the method is carried out in such a manner that the upper side of the insert flushes with the upper side of the sole. So, a homogeneous surface is created.

Preferably, the recess is filled by the insert completely.

The laminar sheet is produced according to above step b) preferably with a constant thickness. Specifically, the laminar sheet can be produced according to above step b) with a thickness between 6.0 mm and 10.0 mm, preferably between 7.0 mm and 9.0 mm. This thickness was found specifically beneficial as it delivers good wearing properties but allows a very economical use of the E-TPU material.

The laminar sheet has preferably a thickness which is between 35 % and 65 % of the total thickness of the sole.

According to a preferred embodiment of the invention a recess is arranged in the rearfoot region of the sole, specifically in the rear third of the longitudinal extension of the sole.

Additionally or alternatively a recess can be arranged in the forefoot region of the sole, specifically in the first third of the longitudinal extension of the sole.

Preferably, the recess has a rectangular shape in a top plan view. This allows evidently a very cost efficient use of the E-TPU material.

The recess can have rounded edges at least at one end seen in longitudinal direction.

Preferably, as the second plastic material being the Expanded Thermoplastic Polyurethan (E-TPU) a material is used which has a density between 0.18 to 0.32 g/cm³. Furthermore, as the second plastic material being the Expanded Thermoplastic Polyurethan (E-TPU) a material can be used which has a tensile strength between 900 kPa and 1.500 kPa, preferably between 1.000 kPa and 1.400 kPa.

A suitable E-TPU material is available by Huntsman International LLC under the trademark "PearlFoam" or by BASF SE under the trademark "Infinergy".

According to the proposed method it becomes possible to efficiently produce a shoe sole with good wearing properties making use of the E-TPU material which is known as such. In spite of this the required amount of E-TPU material remains limited, so that a cost efficient production is possible.

In the drawings embodiments of the invention are shown.
- Fig. 1: shows a top plan view onto a shoe sole of a sports shoe according to a first embodiment of the invention,
- Fig. 2: shows the corresponding side view according to the section A-B of figure 1,
- Fig. 3: shows a top plan view onto a shoe sole of a sports shoe according to a second embodiment of the invention,
- Fig. 4: shows the corresponding side view according to the section C-D of figure 3,
- Fig. 5: shows the sectional view according to the section E-F of figure 4 and
- Fig. 6: shows the sectional view according to the section G-H of figure 4.

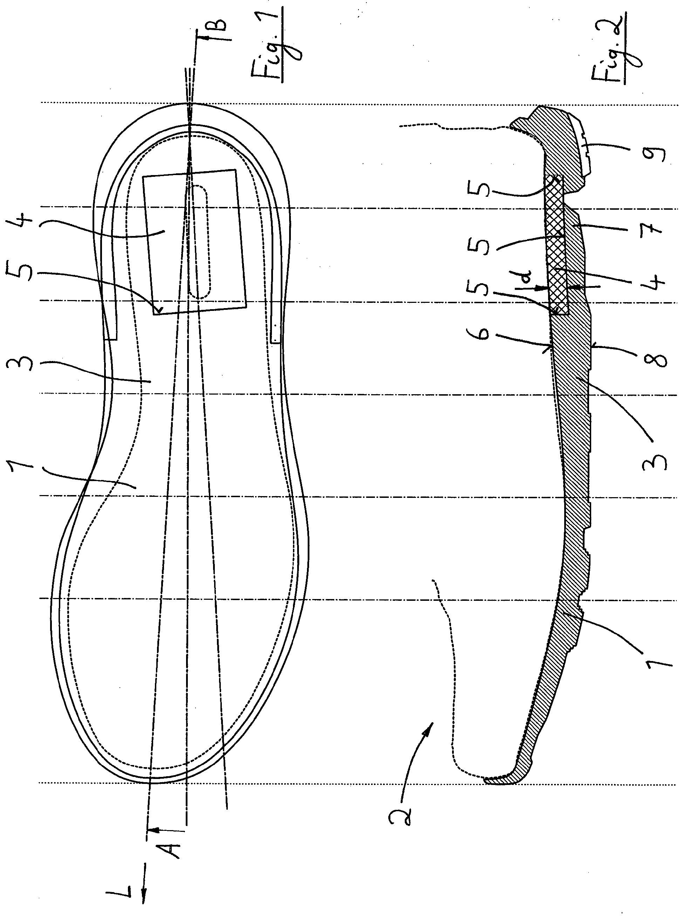

In figures 1 and 2 a fist embodiment of a sole 1 is shown. A shoe 2 is indicated; the sole 1 is part of the shoe 2. The sole 1 consists of a first section 3 and a second section 4.

The first section 3 consists of a suitable plastic material which is usually used for shoe sole, but not of E-TPU. A wide variety of polymer materials can be used here depending on the engineering properties of the material (e. g., tensile strength, stretch properties, fatigue characteristics, dynamic modulus and loss tangent). Examples are thermoplastic urethane or thermoset polymer materials (e. g. polyurethane, polyester, polyester polyurethane, polyether polyurethane). Also a variety of thermoplastic and thermoset polymer foam materials can be employed, including polyurethane and ethylvinylacetate (EVA).

The second section 4 consists of E-TPU. Insofar, reference is explicitly made to WO 2007/082838 A1.

The sole 1 has an upper side 6 and a bottom side 8. The sole 1 is here basically an intermediate sole, wherein an outer sole 9 is attached at the bottom side 8. Furthermore, a - not depicted - insole can be arranged at the upper side 6 of the sole 1.

At the production of the sole 1 at first the first section 3 is produced by injection molding. Here, a recess 5 is formed into the sole 1. More specifically the recess 5 enters into the upper side 6 of the sole 1 and is open to this side. At the bottom end the recess 5 is delimited by a bottom region 7 of the sole 1.

From a plane laminar sheet of E-TPU an insert (which is the second section 4 of the sole 1) is punched out which has a corresponding shape to the recess 5. As can be seen from figure 1 the shape of the recess 5 and thus also the shape of the insert 4 have here a rectangular form; it can also be provided that e. g. the shape is rounded in the rear end region of the recess 5 or insert 4.

In the embodiment according to figures 1 and 2 a single insert 4 is placed in the rearfoot region of the sole 1 and more specifically in the rear third along the longitudinal direction L of the sole 1.

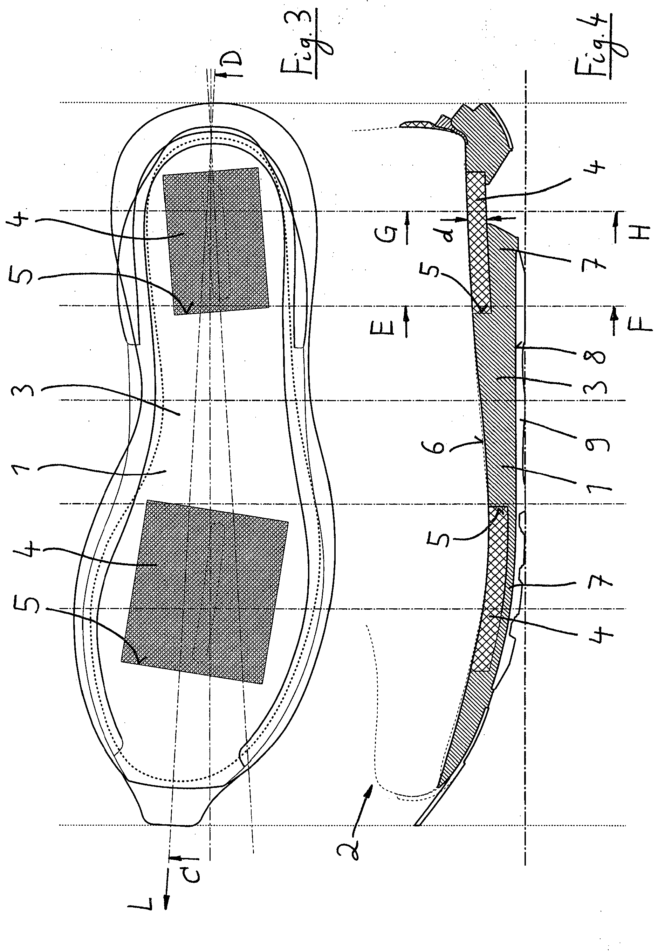

In the embodiment according to figures 3 and 4 two E-TPU inserts 4 are placed in respective recesses 5 in the first section 3. One recess 5 is arranged in the forefoot region and one in the heel region (as in the case of the embodiment according to figures 1 and 2).

In the case of figures 3 and 4 the recesses 5 and inserts 4 have again a rectangular shape.

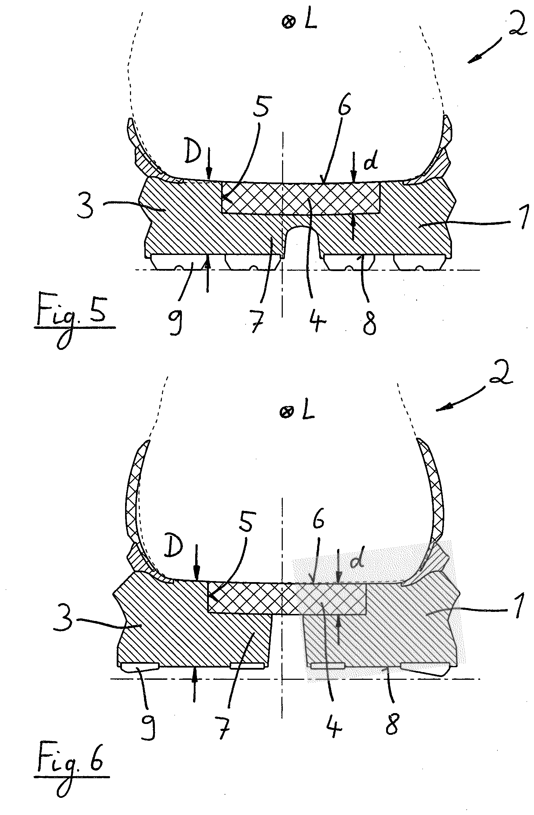

In the figures 5 and 6 cross sectional views E-F and G-H according to figure 4 are shown. Here is can be seen that the thickness d of the insert 4 is preferably between 30 % and 45 % of the total thickness D of the sole 1.

The shoe upper of the shoe 2 is connected with known methods with the sole 1. Also an insole (not depicted) can be placed in the inner of the shoe 2 and on the upper side 6 of the sole 1.

### Reference Numerals:

- 1: Sole
- 2: Shoe
- 3: First section
- 4: Second section (E-TPU) - insert
- 5: Recess
- 6: Upper side of the sole
- 7: Bottom region
- 8: Bottom side of the sole
- 9: Outer sole

- d: Thickness of the insert
- D: Total thickness of the sole
- L: Longitudinal direction

## Claims

1. Method for producing a sole (1) for a shoe (2), especially for a sports shoe, wherein the sole (1) has at least a first section (3) which consists of a first plastic material and has at least a second section (4) which consists of a second plastic material, wherein the second plastic material is Expanded Thermoplastic Polyurethan (E-TPU), wherein the method comprises the steps of:
a) Producing the first section (3) of the sole (1), wherein in the first section (3) at least one recess (5) is created which has an opening at an upper side (6) of the sole (1) and which is at least partially closed by a bottom region (7) at a bottom side (8) of the sole (1), wherein the recess (5) has a defined shape in a top plan view;
b) Producing of a laminar sheet made of the second plastic material;
c) Cutting-out of an insert of the laminar sheet produced according to step b), wherein the insert is or forms at least a part of the second section (4) of the sole (1), wherein the shape of the insert corresponds to the shape of the recess (5), wherein the cutting-out of the insert takes place by punching;
d) Fixing the insert in the recess (5).

2. Method according to claim 1, **characterized in that** the production of the first section (3) of the sole (1) according to step a) of claim 1 takes place by injection molding.

3. Method according to claim 1 or 2, **characterized in that** the fixation of the insert according to step d) of claim 1 takes place by glueing.

4. Method according to one of claims 1 to 3, **characterized in that** the upper side of the insert flushes with the upper side (6) of the sole (1).

5. Method according to one of claims 1 to 4, **characterized in that** the recess (5) is filled by the insert completely.

6. Method according to one of claims 1 to 5, **characterized in that** the laminar sheet is produced according to step b) of claim 1 with a constant thickness (d).

7. Method according to claim 6, **characterized in that** the laminar sheet is produced according to step b) of claim 1 with a thickness (d) between 6.0 mm and 10.0 mm, preferably between 7.0 mm and 9.0 mm.

8. Method according to one of claims 1 to 7, **characterized in that** the laminar sheet has a thickness (d) which is between 35 % and 65 % of the total thickness (D) of the sole (1).

9. Method according to one of claims 1 to 8, **characterized in that** a recess (5) is arranged in the rearfoot region of the sole (1), specifically in the rear third of the longitudinal extension of the sole (1).

10. Method according to one of claims 1 to 9, **characterized in that** a recess (5) is arranged in the forefoot region of the sole (1), specifically in the first third of the longitudinal extension of the sole (1).

11. Method according to one of claims 1 to 10, **characterized in that** the recess (5) has a rectangular shape in a top plan view.

12. Method according to claim 11, **characterized in that** the recess (5) has rounded edges at least at one end seen in longitudinal direction.

13. Method according to one of claims 1 to 12, **characterized in that** as the second plastic material being the Expanded Thermoplastic Polyurethan (E-TPU) a material is used which has a density between 0.18 to 0.32 g/cm³.

14. Method according to one of claims 1 to 13, **characterized in that** as the second plastic material being the Expanded Thermoplastic Polyurethan (E-TPU) a material is used which has a tensile strength between 900 kPa and 1.500 kPa, preferably between 1.000 kPa and 1.400 kPa.

## Patentansprüche

1. Verfahren zur Herstellung einer Sohle (1) für einen Schuh (2), insbesondere für einen Sportschuh, wobei die Sohle (1) mindestens einen ersten Abschnitt (3) aufweist, der aus einem ersten Kunststoffmaterial besteht, und mindestens einen zweiten Abschnitt (4) aufweist, der aus einem zweiten Kunststoffmaterial besteht, wobei das zweite Kunststoffmaterial Expandiertes Thermoplastisches Polyurethan (E-TPU) ist, wobei das Verfahren die Schritte umfasst:
a) Herstellen des ersten Abschnitts (3) der Sohle (1), wobei in dem ersten Abschnitt (3) mindestens eine Ausnehmung (5) erzeugt wird, die an einer Oberseite (6) der Sohle (1) eine Öffnung aufweist und die an einer Unterseite (8) der Sohle (1) durch einen Bodenbereich (7) zumindest teilweise verschlossen ist, wobei die Ausnehmung (5) in einer Draufsicht eine definierte Form aufweist;
b) Herstellen einer flächigen Platte aus dem zweiten Kunststoffmaterial;
c) Ausschneiden eines Einsatzes aus der gemäß Schritt b) hergestellten flächigen Platte, wobei der Einsatz zumindest ein Teil des zweiten Abschnitts (4) der Sohle (1) ist oder bildet, wobei die Form des Einsatzes der Form der Ausnehmung (5) entspricht, wobei das Ausschneiden des Einsatzes durch Stanzen erfolgt;
d) Befestigen des Einsatzes in der Ausnehmung (5).

2. Verfahren nach Anspruch 1, **dadurch gekennzeichnet, dass** die Herstellung des ersten Abschnitts (3) der Sohle (1) gemäß Schritt a) des Anspruchs 1 durch Spritzgießen erfolgt.

3. Verfahren nach Anspruch 1 oder 2, **dadurch gekennzeichnet, dass** die Fixierung des Einsatzes nach Schritt d) von Anspruch 1 durch Verkleben erfolgt.

4. Verfahren nach einem der Ansprüche 1 bis 3, **dadurch gekennzeichnet, dass** die Oberseite des Einsatzes mit der Oberseite (6) der Sohle (1) bündig abschließt.

5. Verfahren nach einem der Ansprüche 1 bis 4, **dadurch gekennzeichnet, dass** die Ausnehmung (5) durch den Einsatz vollständig ausgefüllt wird.

6. Verfahren nach einem der Ansprüche 1 bis 5, **dadurch gekennzeichnet, dass** die flächige Platte gemäß Schritt b) des Anspruchs 1 mit einer konstanten Dicke (d) hergestellt wird.

7. Verfahren nach Anspruch 6, **dadurch gekennzeichnet, dass** die flächige Platte nach Schritt b) von Anspruch 1 mit einer Dicke (d) zwischen 6,0 mm und 10,0 mm, vorzugsweise zwischen 7,0 mm und 9,0 mm, hergestellt wird.

8. Verfahren nach einem der Ansprüche 1 bis 7, **dadurch gekennzeichnet, dass** die flächige Platte eine Dicke (d) aufweist, die zwischen 35 % und 65 % der Gesamtdicke (D) der Sohle (1) beträgt.

9. Verfahren nach einem der Ansprüche 1 bis 8, **dadurch gekennzeichnet, dass** im Hinterfußbereich der Sohle (1), und zwar im hinteren Drittel der Längserstreckung der Sohle (1), eine Ausnehmung (5) angeordnet ist.

10. Verfahren nach einem der Ansprüche 1 bis 9, **dadurch gekennzeichnet, dass** eine Ausnehmung (5) im Vorderfußbereich der Sohle (1), und zwar im ersten Drittel der Längserstreckung der Sohle (1), angeordnet ist.

11. Verfahren nach einem der Ansprüche 1 bis 10, **dadurch gekennzeichnet, dass** die Ausnehmung (5) in einer Draufsicht eine rechteckige Form aufweist.

12. Verfahren nach Anspruch 11, **dadurch gekennzeichnet, dass** die Ausnehmung (5) zumindest an einem Ende in Längsrichtung gesehen abgerundete Kanten aufweist.

13. Verfahren nach einem der Ansprüche 1 bis 12, **dadurch gekennzeichnet, dass** als zweiter Kunststoff, welcher das Expandierte Thermoplastische Polyurethan (E-TPU) ist, ein Material verwendet wird, das eine Dichte zwischen 0,18 bis 0,32 g/cm³ aufweist.

14. Verfahren nach einem der Ansprüche 1 bis 13, **dadurch gekennzeichnet, dass** als zweites Kunststoffmaterial, welches das Expandierte Thermoplastische Polyurethan (E-TPU) ist, ein Material verwendet wird, das eine Zugfestigkeit zwischen 900 kPa und 1.500 kPa, vorzugsweise zwischen 1.000 kPa und 1.400 kPa, aufweist.

## Revendications

1. Procédé de production d'une semelle (1) pour une chaussure (2), en particulier pour une chaussure de sport, la semelle (1) comportant au moins une première section (3) qui est constituée d'une première matière plastique et comportant au moins une seconde section (4) qui est constituée d'une seconde matière plastique, la seconde matière plastique étant du polyuréthanne thermoplastique expansé (E-TPU), le procédé comprenant les étapes consistant à :
a) produire la première section (3) de la semelle (1), au moins un évidement (5) étant créé dans la première section (3), celui-ci comportant une ouverture au niveau d'un côté supérieur (6) de la semelle (1) et étant au moins partiellement fermé par une région inférieure (7) au niveau d'un côté inférieur (8) de la semelle (1), l'évidement (5) présentant une forme définie dans une vue en plan de dessus ;
b) produire une feuille laminaire composée de la seconde matière plastique ;
c) découper une garniture constituée de la feuille laminaire produite selon l'étape b), la garniture constituant ou constituant au moins une partie de la seconde section (4) de la semelle (1), la forme de la garniture correspondant à la forme de l'évidement (5), la découpe de la garniture étant réalisée à l'emportepièce ;
d) fixer la garniture dans l'évidement (5).

2. Procédé selon la revendication 1, **caractérisé en ce que** la production de la première section (3) de la semelle (1) selon l'étape a) de la revendication 1 est réalisée par moulage par injection.

3. Procédé selon la revendication 1 ou 2, **caractérisé en ce que** la fixation de la garniture selon l'étape d) de la revendication 1 est réalisée par collage.

4. Procédé selon l'une des revendications 1 à 3, **caractérisé en ce que** le côté supérieur de la garniture est de niveau avec le côté supérieur (6) de la semelle (1) .

5. Procédé selon l'une des revendications 1 à 4, **caractérisé en ce que** la garniture occupe la totalité de l'évidement (5).

6. Procédé selon l'une des revendications 1 à 5, **caractérisé en ce que** la feuille laminaire est produite selon l'étape b) de la revendication 1 avec une épaisseur (d) constante.

7. Procédé selon la revendication 6, **caractérisé en ce que** la feuille laminaire est produite selon l'étape b) de la revendication 1 avec une épaisseur (d) comprise entre 6,0 mm et 10,0 mm, de préférence entre 7,0 mm et 9,0 mm.

8. Procédé selon l'une des revendications 1 à 7, **caractérisé en ce que** la feuille laminaire présente une épaisseur (d) qui est comprise entre 35 % et 65 % de l'épaisseur totale (D) de la semelle (1).

9. Procédé selon l'une des revendications 1 à 8, **caractérisé en ce qu'**un évidement (5) est formé dans la région d'arrière-pied de la semelle (1), spécifiquement dans le tiers arrière de l'étendue longitudinale de la semelle (1).

10. Procédé selon l'une des revendications 1 à 9, **caractérisé en ce qu'**un évidement (5) est formé dans la région d'avant-pied de la semelle (1), spécifiquement dans le premier tiers de l'étendue longitudinale de la semelle (1).

11. Procédé selon l'une des revendications 1 à 10, **caractérisé en ce que** l'évidement (5) présente une forme rectangulaire dans une vue en plan de dessus.

12. Procédé selon la revendication 11, **caractérisé en ce que** l'évidement (5) comporte des bords arrondis au moins à une extrémité en regardant dans la direction longitudinale.

13. Procédé selon l'une des revendications 1 à 12, **caractérisé en ce que**, comme seconde matière plastique qui est du polyuréthanne thermoplastique expansé (E-TPU), un matériau présentant une densité comprise entre 0,18 et 0,32 g/cm³ est utilisé.

14. Procédé selon l'une des revendications 1 à 13, **caractérisé en ce que**, comme seconde matière plastique qui est du polyuréthanne thermoplastique expansé (E-TPU), un matériau présentant une résistance à la traction comprise entre 900 kPa et 1500 kPa, de préférence entre 1000 kPa et 1400 kPa est utilisé.
